# EUROPEAN PATENT SPECIFICATION

(11) **EP 2 166 727 B1**
(45) Date of publication and mention of the grant of the patent: **22.06.2016**
(21) Application number: 09164770.1
(22) Date of filing: 07.07.2009
(51) Int. Cl.: H04L 29/06

(54) **Center apparatus, terminal apparatus, and authentication system**
Zentrumsvorrichtung, Endgerät und Authentifizierungssystem
Appareil central, appareil de terminal et système d'authentification

(30) Priority: 19.09.2008 JP 2008240196
(43) Date of publication of application: 24.03.2010
(73) Proprietor: HITACHI, LTD., Chiyoda-ku Tokyo 100-8280 (JP)
(72) Inventor: Umezawa, Katsuyuki, Tokyo 100-8220 (JP); Kashiyama, Masamori, Tokyo 100-8220 (JP); Aoshima, Hirokazu, Tokyo 100-8220 (JP)
(74) Representative: Erny, Tobias

(56) References cited:
- WO-A-2007/115209
- WO-A-2008/017008
- GB-A- 2 435 161
- US-A1- 2008 046 719

## Description

### BACKGROUND

The present invention relates to a system for performing user authentication and providing services to a valid user.

An authentication method based on a three entities model of a user, a personal terminal apparatus, and a server is known (for example, FIG. 6, Paragraphs 0057-0068, in JP-A-2003-44436, hereinafter referred to as Document 1). Moreover, a method having a plurality of authentication unit, whereby the authentication is performed stepwise or by using a combination of the plurality of authentication unit is known (for example, FIG. 8, Paragraphs 0071-0077 in JP-A-2002-269043, hereinafter referred to as Document 2). Furthermore, a method is known, in which the terminal apparatus authentications are switched according to the performance of a terminal apparatus (for example, FIG. 20, Paragraphs 0073-0077 in JP-A-2007-305140, hereinafter referred to as Document 3).

### SUMMARY

As the usage of vehicles in recent years, a lease or rental use or a shared use by car sharing has been increasing. In receiving telematics services for vehicles, if a vehicle is an individual's property, then the authentication of an on-board device (car navigation terminal) which is an individual's property is sufficient. However, the authentication of an on-board device is predicted to be insufficient in the future due to the change in the usage of vehicles described above. In other words, the authentication of an individual who is driving a vehicle at that time point is predicted to be important.

In authenticating an individual, in the case of a private vehicle, personal information can be registered in a car navigation terminal so as to be used in the authentication, however, in the case of a rental car or car sharing, personal information cannot be registered in a car navigation terminal of a vehicle to share and thus an alternative method needs to be used. In other words, the user authentication methods may need to be switched according to the usage of a vehicle.

In the Document 1, although an authentication method based on three parties of a user, a personal terminal apparatus, and a server has been disclosed, the user authentication methods cannot be switched according to the usage of a personal terminal apparatus. Moreover, in the Document 2, although a method of authenticating a user stepwise using a combination of a plurality of user authentications has been disclosed, the user authentication methods cannot be switched according to the usage of a terminal apparatus. Furthermore, in the Document 3, although a method of switching terminal apparatus authentications according to the performance of a terminal apparatus has been disclosed, the user authentications via the terminal apparatus cannot be switched.

Document WO 2008/017008 A discloses an authentication system and a center apparatus for providing a service to a terminal apparatus, wherein access to protected services of the center apparatus is controlled according to an authentication policy. Different terminal apparatus are granted different levels of access to protected services. A center apparatus stores a database associating user authentication methods with terminal apparatus identification information, such as an IP address or a terminal name.

Document US 2008/046719 A1 discloses an authentication system for a wireless local area network, wherein multiple authentication methods are used. A center apparatus has a mapping table associating a media access control address of a terminal apparatus with an authentication method used by the terminal apparatus.

Document WO 2007/115209 A discloses a user authentication system that grants users different levels of access to services provided by a center apparatus defending on the user's environment and credentials. Different authentication methods are used for different services and different levels of access.

Document GB 2 435 161 A discloses an authentication system which is mainly concerned with finding an authentication method for a terminal apparatus that is compatible both with the terminal apparatus and the center apparatus. In order to avoid having to probe all possible authentication methods every time a terminal apparatus tries to access a center apparatus, the center apparatus stores a database of previously-used authentication methods for each terminal apparatus.

The present invention has been made in light of the above-described circumstances, and provides a system, in which after authenticating a device, the user authentication methods are switched and used.

Specifically, in performing user authentication via a terminal apparatus, the terminal apparatus is authenticated first and then based on this authentication result, a practical use of the terminal apparatus is determined, and the user authentication methods are switched so as to suit this practical use and the resultant method is implemented.

That is, in a terminal apparatus and a user authentication system provided by the disclosed system, the terminal apparatus makes an access request to a center apparatus and sends access request information. Upon receipt of the access request information, the center apparatus makes a terminal apparatus authentication request to the terminal apparatus and sends server authentication information. The terminal apparatus authenticates the server by using the server authentication information, and as a result, if the server is validated, the terminal apparatus sends terminal apparatus authentication information. Upon receipt of the terminal apparatus authentication information, a terminal apparatus practical-use determining unit of the center apparatus determines that the terminal apparatus is a valid terminal apparatus from terminal apparatus information registered in a terminal apparatus information DB (DataBase) and the terminal apparatus authentication information received from the terminal apparatus. Thereafter, an authentication method determining unit determines a user authentication method from the terminal apparatus determination result and a decision rule of a user authentication method registered in an authentication policy DB. If digest authentication using a user device is determined, the center apparatus sends a digest authentication request to the terminal apparatus. The terminal apparatus sends the digest authentication request to the user device. An encryption operation unit of the user device performs an encryption operation by using the received digest authentication request information and secret information that is stored in advance in a key storage unit, and sends digest authentication information as the result to the terminal apparatus. The terminal apparatus transfers this digest authentication information to the center apparatus. An authentication processing unit of the center apparatus performs user authentication by using the received digest authentication information and the user information registered in a user information DB, and if it is confirmed that the user is a valid user, a service providing unit provides a service to the terminal apparatus.

Moreover, if the user authentication method determining unit of the center apparatus determines authentication using an ID (identification) and a password, the center apparatus sends an ID and password authentication request to the terminal apparatus. The terminal apparatus acquires a user ID and a password registered in a user information unit. At this time, instead of acquiring the ID and password registered in the user information unit of the terminal apparatus, the terminal apparatus may acquire an ID and a password registered in the user device via a data transmission/reception unit.

The terminal apparatus sends the acquired ID and password to the center apparatus. The authentication processing unit of the center apparatus performs user authentication by using the received ID and password and the user information registered in the user information DB, and if the user is validated, the service providing unit provides a service to the terminal apparatus.

According to a more specific example, there is provided an authentication system wherein a center apparatus authenticates a user using a terminal apparatus in order to provide a service, wherein the terminal apparatus includes: a terminal apparatus information unit for storing terminal apparatus information of the terminal apparatus; and a service enjoying unit for enjoying a service provided by the center apparatus, wherein the center apparatus includes: a terminal apparatus information DB for storing a practical use for each terminal apparatus; an authentication policy DB having a plurality of combinations of practical uses and authentication methods of the terminal apparatus registered therein as an authentication policy; an authentication method determining unit which determines a user authentication method from the authentication policy registered in the authentication policy DB; an authentication processing unit which performs authentication processing according to a user authentication method determined by the authentication method determining unit; and a service providing unit which provides a service to the terminal apparatus if the authentication processing is successful.

Furthermore, the center apparatus includes a terminal apparatus practical-use determining unit which determines a practical use of the terminal apparatus from the terminal apparatus information received from the terminal apparatus and the terminal apparatus information DB, wherein the authentication method determining unit of the center apparatus may determine a user authentication method based on a practical use of the terminal apparatus determined by the terminal apparatus practical-use determining unit and the authentication policy registered in the authentication policy DB.

Furthermore, the terminal apparatus may include an authentication processing unit for performing authentication processing according to an authentication request of the center apparatus, and the center apparatus may include a user information DB for storing information associated with a user ID, wherein when a user authentication method determined by the authentication method determining unit requests the terminal apparatus to generate authentication information, the center apparatus may send an authentication request including a random number to the terminal apparatus, and the authentication processing unit of the terminal apparatus may generate authentication information based on the random number, and the terminal apparatus may send to the center apparatus this authentication information along with user information which the user information unit of the terminal apparatus stores, and the authentication processing unit of the center apparatus may perform the user authentication processing based on the authentication information and user information received from the terminal apparatus and the sent random number and the information stored in the user information DB.

Furthermore, the terminal apparatus may include a user device and a data transmission/reception unit for transmitting/receiving data, wherein the user device may include: a data transmission/reception unit for transmitting/receiving data to/from the terminal apparatus; a key storage unit for storing secret information; and an encryption operation unit for performing encryption/decryption by using the secret information, wherein an authentication processing unit of the center apparatus may send an authentication request to the terminal apparatus based on the determined authentication method, wherein an authentication processing unit of the terminal apparatus may send the authentication request to the user device according to the authentication request, wherein the encryption operation unit of the user device may send a processing result of the encryption/decryption based on the authentication request to the terminal apparatus, wherein the authentication processing unit of the terminal apparatus may send a processing result of the encryption/decryption to the center apparatus, and wherein the authentication processing unit of the center apparatus may perform a processing based on a processing result of the encryption/decryption in the determined authentication method.

Furthermore, the authentication processing unit of the center apparatus may make a terminal apparatus authentication request based on an access request from the terminal apparatus, and may send server authentication information in making the terminal apparatus authentication request, wherein an authentication processing unit of the terminal apparatus may authenticate the center apparatus by using the server authentication information, and wherein if the authentication processing unit of the terminal apparatus can authenticate the center apparatus, then the terminal apparatus may send the terminal apparatus information to the center apparatus, and the authentication processing unit of the center apparatus may authenticate the terminal apparatus based on the terminal apparatus information.

Note that, a user authentication method to request may be an ID password method, a digest authentication method, or an authentication method based on a public key infrastructure (PKI).

Moreover, the above-described center apparatus includes: a communication unit for transmitting/receiving data; a terminal apparatus information DB for storing a practical use for each terminal apparatus; an authentication policy DB having a plurality of combinations of practical uses and authentication methods of the terminal apparatus registered therein as an authentication policy; an authentication method determining unit which determines a user authentication method from the authentication policy registered in the authentication policy DB; an authentication processing unit which performs authentication processing according to a user authentication method determined by the authentication method determining unit; and a service providing unit which provides a service to the terminal apparatus if the authentication processing is successful.

Furthermore, the center apparatus may include a terminal apparatus practical-use determining unit which determines a practical use of a terminal apparatus from the terminal apparatus information received from the terminal apparatus and the terminal apparatus information DB, wherein the authentication method determining unit may determine a user authentication method based on a practical use of the terminal apparatus determined by the terminal apparatus practical-use determining unit and the authentication policy registered in the authentication policy DB.

Moreover, the above-described terminal apparatus includes: a communication unit for transmitting/receiving data to/from the center apparatus; a data transmission/reception unit for transmitting/receiving data to/from a user device; a terminal apparatus information unit for storing terminal apparatus information of the terminal apparatus; an authentication processing unit which performs authentication processing according to an authentication request of the center apparatus; and a service enjoying unit which enjoys a service provided by the center apparatus if the terminal apparatus is authenticated by the center apparatus through the authentication processing.

Furthermore, the terminal apparatus may include a user information unit for storing user information of one or more users, wherein the authentication processing unit may acquire the user information from the user information unit according to an authentication request of the center apparatus, and the communication unit may send the user information to the center apparatus.

Furthermore, in the terminal apparatus, the authentication processing unit may acquire the terminal apparatus information from the terminal apparatus information unit according to an authentication request of the center apparatus, and the communication unit may send the terminal apparatus information to the center apparatus.

According to the teaching herein, when a center apparatus authenticates a terminal apparatus and a user, user authentication methods are switched according to the usage of the terminal apparatus, thereby making it possible to perform more appropriate authentication processing.

These and other benefits are described throughout the present specification. A further understanding of the nature and advantages of the invention may be realized by reference to the remaining portions of the specification and the attached drawings.

### BRIEF DESCRIPTION OF THE DRAWINGS

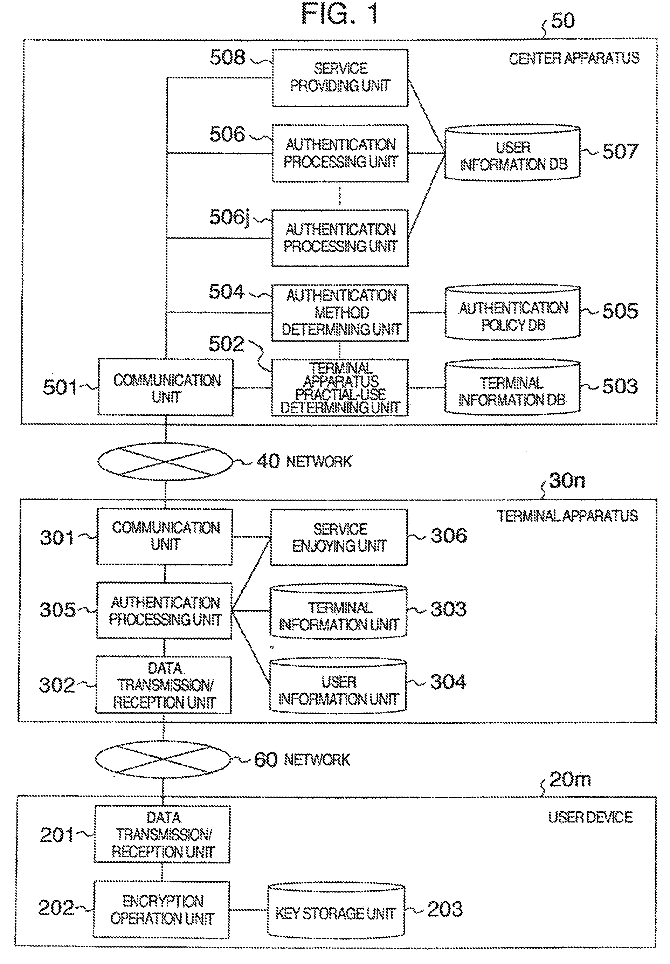

FIG. 1 shows an example of a configuration diagram of a terminal apparatus and user authentication system according to an embodiment of the present invention.

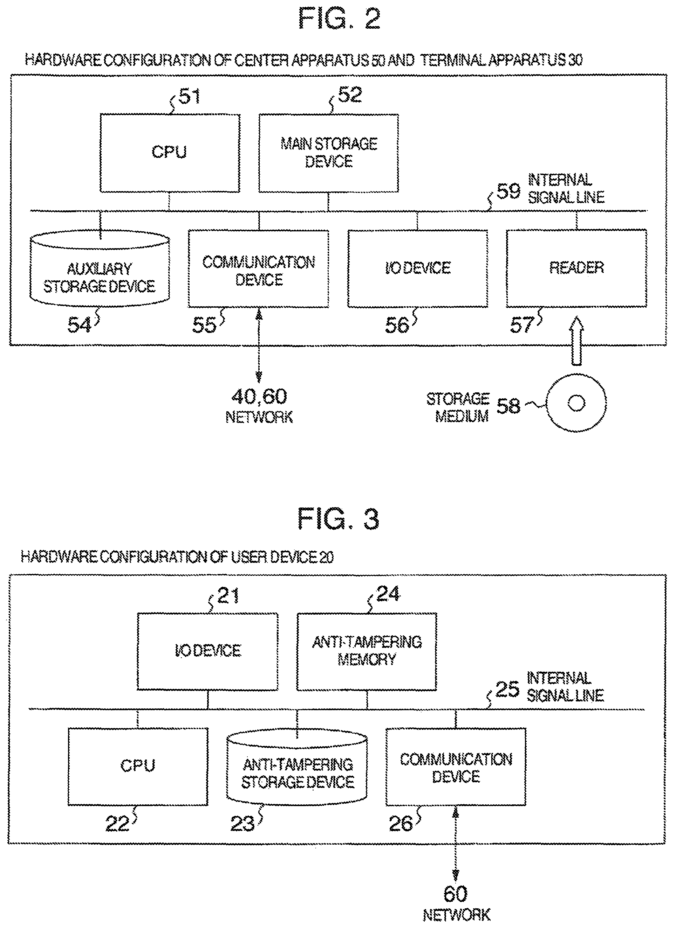

FIG. 2 shows an example of a hardware configuration of a terminal apparatus according to this embodiment.
FIG. 3 shows an example of a hardware configuration of a user device according to this embodiment.

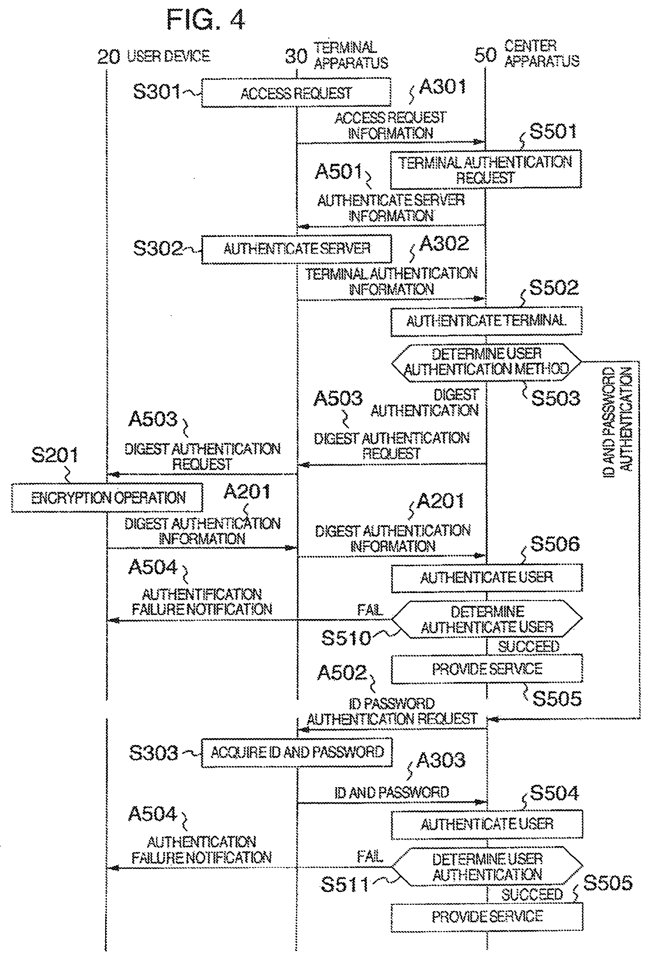

FIG. 4 shows an example of a process flow in performing authentication processing according to this embodiment.

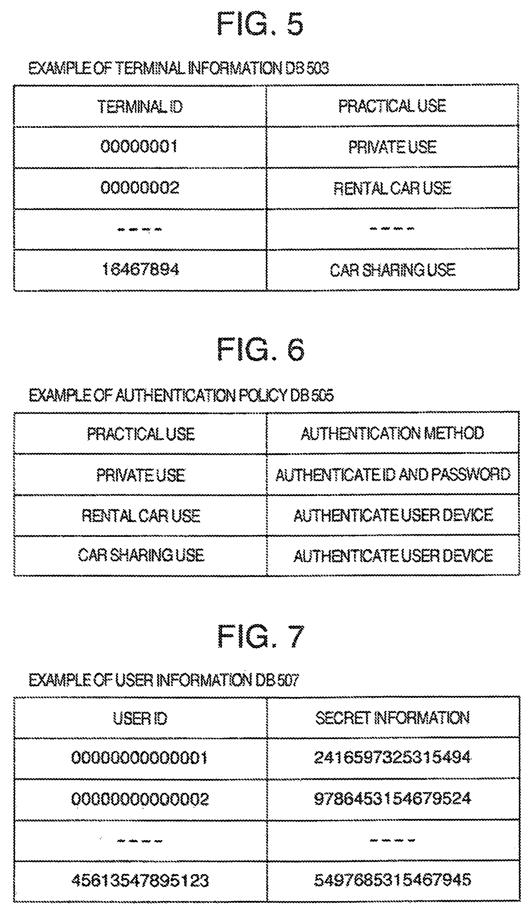

FIG. 5 shows an example of a configuration of a terminal apparatus information DB according to this embodiment.
FIG. 6 shows an example of a configuration of an authentication policy DB of an embodiment of the present invention.
FIG. 7 shows an example of a configuration of a user information DB according to this embodiment.

### DESCRIPTION OF THE EMBODIMENTS

FIG. 1 is a functional configuration diagram of a terminal apparatus and a user authentication system according to an embodiment of the present invention. In the terminal apparatus and the user authentication system of this embodiment, as shown in FIG. 1, n terminal apparatuses 30n (n is an integer equal to or greater than 1 and n may be omitted.) and a center apparatus 50 are coupled with each other via one or more networks 40, such as the Internet and a portable telephone network. Furthermore, m user devices 20m (m is an integer equal to or greater than 1 and m may be omitted.) are coupled with one terminal apparatus 30n via one or more networks 60 such as an in-car wired network and a non-contact wireless communication network.

The center apparatus 50 authenticates the terminal apparatus 30n via the network 40, and based on this authentication result, the center apparatus 50 determines a user authentication method and notifies the terminal apparatus 30n of the determined user authentication method.

The terminal apparatus 30n performs a user authentication processing based on the notified authentication method. If this specified user authentication processing is a method using a user device, the terminal apparatus 30n requests the user device 20m for user authentication information via the network 60. The terminal apparatus 30n notifies the center apparatus 50 of the user authentication information acquired from the user device 20m, via the network 40. The center apparatus 50 performs authentication based on the user authentication information sent from the terminal apparatus 30n, and if the authentication passes (the authentication is successful), the center apparatus 50 provides a service to the terminal apparatus 30n via the network 40. If the authentication fails, then the center apparatus 50 sends an authentication failure notification to the terminal apparatus 30n via the network 40.

The user device 20m includes: a data transmission/reception unit 201 for transmitting/receiving data to/from the terminal apparatus 30n; a key storage unit 203 for storing secret information such as a key and a password, and an encryption operation unit 202 for performing encryption by using the secret information.

The terminal apparatus 30n includes: a communication unit 301 for transmitting/receiving data to/from the center apparatus 50 via the network 40 or 60; a data transmission/reception unit 302 for transmitting/receiving data to/from the user device 20m via the network 60; a terminal apparatus information unit 303 for storing terminal apparatus information of the terminal apparatus 30n; a user information unit 304 for storing user information of one or more users; an authentication processing unit 305 which performs authentication processing according to an authentication request of the center apparatus 50; and a service enjoying unit 306 for enjoying a service provided by the center apparatus 50. An example of the terminal apparatus information in which the terminal apparatus information unit 303 stores includes a terminal apparatus ID.

The center apparatus 50 includes: a communication unit 501 for transmitting/receiving data via the network 40; a terminal apparatus information DB 503 for storing terminal apparatus information; a terminal apparatus practical-use determining unit 502 which determines a practical use of the terminal apparatus 30n from the terminal apparatus information received from the terminal apparatus 30n and the terminal apparatus information stored in the terminal apparatus information DB 503; an authentication policy DB 505 having a plurality of combinations of practical uses and authentication methods of the terminal apparatus registered therein as an authentication policy; an authentication method determining unit 504 which determines a user authentication method from the determination result of the terminal apparatus practical-use determining unit 502 and the authentication policy registered in the authentication policy DB; a plurality of authentication processing units 506j (j is an integer equal to or greater than 1 and j may be omitted.) which perform an authentication processing based on the determination of the authentication method determining unit 504; a user information DB 507 for managing user information; and a service providing unit 508 for providing a service.

Note that, if the authentication method determined based on the determination of the authentication method determining unit 504 of the center apparatus 50 is a method which does not use the user device 20m, then the user device 20m and the data transmission/reception unit 302 of the terminal apparatus 30n are not used. Moreover, if a method using the user device 20m is determined, the user information unit 304 of the terminal apparatus 30n is not used.

FIG. 2 is a hardware configuration diagram of the center apparatus 50. In the center apparatus 50, a CPU 51, a main storage device 52, an auxiliary storage device 54, a communication device 55, an input/output (I/O) device 56, a reader 57 of a storage medium 58, and the like are coupled with each other via an internal communication line 59 such as a bus.

The terminal apparatus 30n also has a hardware configuration (the illustration is omitted) similar to that of the center apparatus 50, although there is a difference in the size or performance thereof.

FIG. 3 is a hardware configuration diagram of the user device 20m. In the user device 20m, a CPU 22, an I/O device 21, an anti-tampering memory 24, an anti-tampering storage device 23, a communication device 26, and the like are coupled with each other via an internal communication line 25 such as a bus.

Each processing of this embodiment described below is implemented by loading a processing program stored in the auxiliary storage device 54 of each apparatus into the main memory unit 52 and executing the same by the CPU 51. Moreover, each program may be stored in the auxiliary storage device 54 in advance, or may be loaded via the other storage medium or a communication medium (the network 40 or a carrier or digital signal propagating over the network 40) when required.

FIG. 4 is a process flow chart when the center apparatus 50 performs a terminal apparatus authentication processing and consequently performs the authentication processing using the user device 20m.

First, the service enjoying unit 306 of the terminal apparatus 30n makes an access request to the center apparatus 50 (S301), and sends access request information A301. Upon receipt of the access request information A301, the service providing unit 508 of the center apparatus 50 makes a terminal apparatus authentication request by sending server authentication information A501 to the terminal apparatus 30n (S501).

The authentication processing unit 305 of the terminal apparatus 30n authenticates a server by using the server authentication information A501 (S302), and as a result of the server authentication, if the server is validated, the authentication processing unit 305 of the terminal apparatus 30n sends terminal apparatus authentication information A302. The terminal apparatus authentication information A302 includes at least a terminal apparatus ID or the information obtained by encrypting the terminal apparatus ID with a secret key or the like of the server. Upon receipt of the terminal apparatus authentication information A302, the terminal apparatus practical-use determining unit 502 of the center apparatus 50 authenticates whether the terminal apparatus is a valid one, from the terminal apparatus information registered in the terminal apparatus information DB 503 and the terminal apparatus authentication information A302 received from the terminal apparatus 30n (S502). If the terminal apparatus is validated, the authentication method determining unit 504 determines a practical use of the terminal apparatus from the terminal apparatus ID included in the terminal apparatus authentication information A302 and the terminal apparatus information DB 503 shown in FIG. 5, and then the authentication method determining unit 504 determines a user authentication method from this practical use and a decision rule of the user authentication method (authentication policy) registered in the authentication policy DB 505 (S503). The subsequent processes will be split according to this decision result of the user authentication method. First, a case in which digest authentication using the user device 20m is determined is described below.

The authentication method determining unit 504 of the center apparatus 50 sends a digest authentication request A503 to the terminal apparatus 30n. The terminal apparatus 30n sends the received digest authentication request A503 to the user device 20m. The encryption operation unit 202 of the user device 20m performs an encryption operation by using the information included in the received digest authentication request A503 and the secret information (specifically, secret information associated with the user ID) that is stored in the key storage unit 203 in advance (S201). For example, the authentication method determining unit 504 of the center apparatus 50 sends the digest authentication information A503 including a random number, and the encryption operation unit 202 performs an encryption operation on a random number included in the digest authentication information A503, with secret information of a user as a key.

The encryption operation unit 202 sends digest authentication information A201 as a result of the operation to the terminal apparatus 30n. The terminal apparatus 30n transfers this digest authentication information A201 to the center apparatus 50. The authentication processing unit 506j of the center apparatus 50 performs user authentication by using the received digest authentication information A201 and the user information (specifically, secret information associated with the user ID) registered in the user information DB 507 (S506). Specifically, for example, the authentication processing unit 506j of the center apparatus 50 checks if the same result of the encryption operation can be obtained, by using the same random number as the one sent to the terminal apparatus 30n and the secret information associated with the user ID.

If the user is validated, the service providing unit 508 provides a service to the terminal apparatus 30n, and the service enjoying unit 306 of the terminal apparatus 30n enjoys the service (S505). If it is determined that the user is not a valid user (S510), then the service provision by the service providing unit 508 is not performed, and the authentication processing unit 506j of the center apparatus 50 sends an authentication failure notification (A504), which is then displayed on the terminal apparatus 30n.

Next, a case in which an ID password authenticating method is determined by the user authentication method determining process (S503) is described below.

The center apparatus 50 sends an ID password authentication request A502 to the terminal apparatus 30n. The authentication processing unit 305 of the terminal apparatus 30n acquires the user ID and password registered in the user information unit 304 (S303). At this time, instead of acquiring the ID and password registered in the user information unit of the terminal apparatus 30n, the authentication processing unit 305 of the terminal apparatus 30n may acquire the ID and password registered in the user device 20m via the data transmission/reception unit 302. Moreover, the ID and password may be input by a user using the I/O device 56 of the terminal apparatus 30n.

The communication unit 301 of the terminal apparatus 30n sends the ID and password A303 acquired by the authentication processing unit 305 to the center apparatus 50. The authentication processing unit 506j of the center apparatus 50 performs user authentication by using the received ID and password A203 and the user information registered in the user information DB 507 (S504).

If the user is validated, the service providing unit 508 provides a service to the terminal apparatus, and the service enjoying unit 306 of the terminal apparatus 30n enjoys the service (S505). If it is determined that the user is not a valid user (S511), then the service provision by the service providing unit 508 is not performed, and the authentication processing unit 506j of the center apparatus 50 sends an authentication failure notification (A504), which is then displayed on the terminal apparatus 30n.

FIG. 5 shows an example of the terminal apparatus information registered in the terminal apparatus information DB 503 of the center apparatus 50. The terminal apparatus ID is associated with its practical use and registered. By including the terminal apparatus ID in the terminal apparatus authentication information A302 sent from the terminal apparatus 30n to the center apparatus 50 in FIG. 4, the center apparatus 50 can identify the practical use of the terminal apparatus 30n from the terminal apparatus information DB 503 shown in FIG. 5. Additionally, the information on the practical use of the terminal apparatus may be included in the terminal apparatus authentication information A302. In this case, the terminal apparatus information DB of the center apparatus 50 does not require the information on the practical use.

FIG. 6 shows an example of the authentication policy registered in the authentication policy DB 505 of the center apparatus 50. A practical use of the terminal apparatus is associated with an authentication method and registered. In the user authentication method determining process (S503) of the center apparatus 50 in FIG. 4, by referring to the authentication policy DB 505, a user authentication method which is requested to the terminal apparatus 30n can be determined. Additionally, in this embodiment, as the practical use, how to utilize a vehicle is described as an example, however, the type of information doesn't matter if it is the information for determining the authentication method. Moreover, as the authentication method, two types of methods are embodied here, however, three or more types of methods may be embodied.

FIG. 7 shows an example of the user information registered in the user information DB 507 of the center apparatus 50, where a user ID and an authentication method are associated with each other and registered. The secret information is information to which the authentication processing unit 506 of the center apparatus refers in the user authentication processing (S504 and S506) of the center apparatus 50 in FIG. 4. In this embodied, the secret information is used as a password for an ID password authenticating method or a secret key for the digest authentication method. Since necessary secret information differs according to the difference in the user authentication processing which the center apparatus 50 performs, the user information DB 507 may include information other than the information shown in FIG. 7. For example, in the case of the user authentication method based on the public key encryption method, the user information DB 507 may include a public key certificate of a user as the user information. Moreover, necessary secret information which is not stored in the user information DB 507 may be acquired from the terminal apparatus 30n at every user authentication.

In FIG. 4, the terminal apparatus 30n performs the server authentication processing (S302), however, the server authentication may be omitted by setting a restriction that the terminal apparatus 30n accesses only a specific center apparatus 50.

Moreover, the transmission/reception of data may be performed by encrypting communications between the center apparatus 50 and the terminal apparatus 30n, between the terminal apparatus 30n and the user device 20m, and between the center apparatus 50 and the user device 20m.

Moreover, the user authentication method determined by the center apparatus 50 is not limited to the ID password authentication and the digest authentication, and any user authentication may be performed.

Features, components and specific details of the structures of the above-described embodiments may be exchanged or combined to form further embodiments optimized for the respective application. As far as those modifications are readily apparent for an expert skilled In the art they shall be disclosed implicitly by the above description without specifying explicitly every possible combination, for the sake of conciseness of the present description.

## Claims

1. A center apparatus (50) for providing a service to a terminal apparatus (30n), comprising:
- a communication unit (501) adapted to transmit/receive data;
- an authentication method determining unit (504) ;
- an authentication processing unit (506) adapted to perform an authentication processing according to a user authentication method determined by the authentication method determining unit (504); and
- a service providing unit (508) adapted to provide a service to the terminal apparatus (30n) if the authentication processing is successful, **characterized by**
- a terminal apparatus information database (503) adapted to store a practical use for each terminal apparatus (30n), wherein each terminal apparatus is associated with one of a plurality of different practical uses;
- an authentication policy database (505) having a plurality of combinations of practical uses and user authentication methods of the terminal apparatus (30n) registered therein as an authentication policy;
wherein the authentication determining unit (504) is adapted to determine a user authentication method from the authentication policy registered in the authentication policy database (505), and
wherein the center apparatus (50) further comprises a terminal apparatus practical-use determining unit (502) adapted to determine a practical use of the terminal apparatus (30n) from terminal apparatus information received from the terminal apparatus (30n) and the terminal apparatus information database (503), wherein
the authentication method determining unit (504) is adapted to determine a user authentication method based on a practical use of the terminal apparatus (30n) determined by the terminal apparatus practical-use determining unit (502) and the authentication policy registered in the authentication policy database (505).

2. An authentication system comprising a center apparatus (50) and a terminal apparatus (30n), wherein the center apparatus (50) is adapted to authenticate a user using the terminal apparatus (30n) in order to provide a service, wherein the terminal apparatus (30n) comprises:
- a terminal apparatus information unit (303) adapted to store terminal apparatus information of the terminal apparatus (30n); and
- a service enjoying unit (306) adapted to enjoy a service provided by the center apparatus (50), wherein
the center apparatus (50) comprises:
- an authentication method determining unit (504);
- an authentication processing unit (506) adapted to perform an authentication processing according to a user authentication method determined by the authentication method determining unit (504); and
- a service providing unit (508) adapted to provide a service to the terminal apparatus (30n) if the authentication processing is successful
**characterized in that** the center apparatus (50) further comprises:
- a terminal apparatus information database (503) adapted to store a practical use for each terminal apparatus (30n), wherein each terminal apparatus is associated with one of a plurality of different practical uses; and
- an authentication policy database (505) having a plurality of combinations of practical uses and user authentication methods of the terminal apparatus (30n) registered therein as an authentication policy;
wherein the authentication determining unit (504) is adapted to determine a user authentication method from the authentication policy registered in the authentication policy database (505), and
wherein the center apparatus (50) further includes a terminal apparatus practical-use determining unit (502) which determines a practical use of the terminal apparatus (30n) from terminal apparatus information received from the terminal apparatus (30n) and the terminal apparatus information database (503), wherein
the authentication method determining unit (504) determines a user authentication method based on a practical use of the terminal apparatus (30n) determined by the terminal apparatus practical-use determining unit (502) and the authentication policy registered in the authentication policy database (505).

3. The authentication system according to claim 2, wherein the terminal apparatus (30n) further comprises:
- a communication unit (301) adapted to transmit/receive data to/from the center apparatus (50);
- a data transmission/reception unit (302) adapted to transmit/receive data to/from a user device (20m); and
- an authentication processing unit (305) adapted to perform authentication processing according to an authentication request of the center apparatus (50).

4. The authentication system according to claim 3, wherein the terminal apparatus (30n) further comprises a user information unit (304) adapted to store user information of one or more users, wherein
the authentication processing unit (305) is adapted to acquire the user information from the user information unit (304) according to an authentication request of the center apparatus (50), and wherein
the communication unit (301) is adapted to send the user information to the center apparatus (50).

5. The authentication system according to claim 3, wherein
the authentication processing unit (305) is adapted to acquire the terminal apparatus information from the terminal apparatus information unit (303) according to an authentication request of the center apparatus (50), and wherein
the communication unit (301) is adapted to send the terminal apparatus information to the center apparatus (50).

6. The authentication system according to claim 2, wherein
the terminal apparatus (30n) includes an authentication processing unit (305) adapted to perform authentication processing according to an authentication request of the center apparatus (50), wherein
the center apparatus (50) includes a user information database (507) adapted to store information associated with a user ID, wherein
when a user authentication method determined by the authentication method determining unit (504) requests the terminal apparatus (30n) to generate authentication information,
the center apparatus (50) is adapted to send an authentication request including a random number to the terminal apparatus (30n), and
the authentication processing unit (305) of the terminal apparatus (30n) is adapted to generate authentication information based on the random number, the terminal apparatus (30n) is adapted to send to the center apparatus (50) this authentication information along with user information stored in a user information unit (304) of the terminal apparatus (30n), and
the authentication processing unit (506) of the center apparatus (50) is adapted to perform the user authentication processing based on the authentication information and the user information received from the terminal apparatus (30n) and the sent random number and the information stored in the user information database (507).

7. The authentication system according to claim 2, wherein
the terminal apparatus (30n) includes a user device (20m) and a data transmission/reception unit (302) adapted to transmit/receive data, wherein the user device (20m) includes:
- a data transmission/reception unit (201) adapted to transmit/receive data to/from the terminal apparatus (30n);
- a key storage unit (203) adapted to store secret information; and
- an encryption operation unit (202) adapted to perform encryption/decryption by using the secret information, wherein
the authentication processing unit (506) of the center apparatus (50) is adapted to send an authentication request to the terminal apparatus (30n) based on the terminal authentication method, wherein
an authentication processing unit of the terminal apparatus (30n) is adapted to send the authentication request to the user device (20m) according to the authentication request, wherein
the encryption operation unit (202) of the user device (20m) is adapted to send a processing result of the encryption/decryption based on the authentication request to the terminal apparatus (30n), wherein
the authentication processing unit (305) of the terminal apparatus (30n) is adapted to send a processing result of the encryption/decryption to the center apparatus (50), and wherein
the authentication processing unit (506) of the center apparatus (50) is adapted to perform processing based on a processing result of the encryption/decryption in the determined authentication method.

8. The authentication system according to claim 2, wherein
the authentication processing unit (506) of the center apparatus (50) is adapted to make a terminal apparatus authentication request based on an access request from the terminal apparatus (30n), and to send server authentication information in making the terminal apparatus authentication request, wherein
an authentication processing unit (305) of the terminal apparatus (30n) is adapted to authenticate the center apparatus (50) by using the server authentication information, and
when the center apparatus (50) is successfully authenticated, the terminal apparatus (30n) is adapted to send the terminal apparatus information to the center apparatus (50), and
the authentication processing unit (506) of the center apparatus (50) is adapted to authenticate the terminal apparatus (30n) based on the terminal apparatus information.

9. The authentication system according to any of claims 2 - 8, wherein a user authentication method to request is an ID password method, a digest authentication method, or a public key authentication method.

10. An authentication procedure wherein a center apparatus (50) authenticates a user using a terminal apparatus (30n) in order to provide a service, which comprises the steps:
- storing terminal apparatus information of the terminal apparatus (30n) in a terminal apparatus information unit (303) of the terminal apparatus (30n);
- enjoying a service provided by the center apparatus (50) in a service enjoying unit (306) of the terminal apparatus (30n), wherein
the method further comprises the steps:
- storing a practical use for each terminal apparatus (30n) in a terminal apparatus information database (503) of the center apparatus (50), wherein each terminal apparatus is associated with one of a plurality of different practical uses;
- registering a plurality of combinations of practical uses and authentication methods of the terminal apparatus (30n) in an authentication policy database (505) of the center apparatus (50) as an authentication policy;
- determining a user authentication method from the authentication policy registered in the authentication policy database (505) with an authentication method determining unit (504) of the center apparatus (50);
- performing an authentication processing according to a user authentication method determined by the authentication method determining unit (504) with an authentication processing unit (506) of the center apparatus (50); and
- providing a service to the terminal apparatus (30n) if the authentication processing is successful,
wherein the center apparatus (50) includes a terminal apparatus practical-use determining unit (502) which determines a practical use of the terminal apparatus (30n) from terminal apparatus information received from the terminal apparatus (30n) and the terminal apparatus information database (503),
wherein
the authentication method determining unit (504) determines a user authentication method based on a practical use of the terminal apparatus (30n) determined by the terminal apparatus practical-use determining unit (502) and the authentication policy registered in the authentication policy database (505).

## Patentansprüche

1. Zentralvorrichtung (50) zum Bereitstellen eines Dienstes für eine Endgerätvorrichtung (30n), die umfasst:
- eine Kommunikationseinheit (501), die ausgelegt ist, Daten zu senden bzw. zu empfangen;
- eine Authentifikationsverfahrensbestimmungseinheit (504);
- eine Authentifikationsverarbeitungseinheit (506), die ausgelegt ist, eine Authentifikationsverarbeitung gemäß einem durch die Authentifikationsverfahrensbestimmungseinheit (504) bestimmten Authentifikationsverfahren auszuführen; und
- eine Dienstbereitstellungseinheit (508), die ausgelegt ist, für die Endgerätvorrichtung (30n) einen Dienst bereitzustellen, wenn die Authentifikationsverarbeitung erfolgreich ist, **gekennzeichnet durch**
- eine Endgerätvorrichtungsinformationsdatenbank (503), die ausgelegt ist, eine praktische Verwendung für jede Endgerätvorrichtung (30n) zu speichern, wobei jeder Endgerätvorrichtung eine von mehreren verschiedenen praktischen Verwendungen zugeordnet ist;
- eine Authentifikationsstrategiedatenbank (505) mit mehrereh in ihr als eine Authentifikationsstrategie eingetragenen Kombinationen von praktischen Verwendungen und Anwenderauthentifikationsverfahren der Endgerätvorrichtung (30n);
wobei die Authentifikationsbestimmungseinheit (504) ausgelegt ist, ein Anwenderauthentifikationsverfahren aus der in der Authentifikationsstrategiedatenbank (505) eingetragenen Authentifikationsstrategie zu bestimmen, und
wobei die Zentralvorrichtung (50) ferner eine Einheit für die Bestimmung der praktischen Verwendung einer Endgerätvorrichtung (502) umfasst, die ausgelegt ist, eine praktische Verwendung der Endgerätvorrichtung (30n) aus von der Endgerätvorrichtung (30n) empfangenen Endgerätvorrichtungsinformationen und der Endgerätvorrichtungsinformationsdatenbank (503) zu bestimmen, wobei
die Authentifikationsverfahrensbestimmungseinheit (504) ausgelegt ist, ein Anwenderauthentifikationsverfahren anhand einer **durch** die Einheit für die Bestimmung der praktischen Verwendung einer Endgerätvorrichtung (502) bestimmten praktischen Verwendung der Endgerätvorrichtung (30n) und der in der Authentifikationsstrategiedatenbank (505) eingetragenen Authentifikationsstrategie zu bestimmen.

2. Authentifikationssystem, das eine Zentralvorrichtung (50) und eine Endgerätvorrichtung (30n) umfasst, wobei die Zentralvorrichtung (50) ausgelegt ist, einen Anwender zu authentifizieren, der die Endgerätvorrichtung (30n) verwendet, um einen Dienst bereitzustellen, wobei die Endgerätvorrichtung (30n) umfasst:
- eine Endgerätvorrichtungsinformationseinheit (303), die ausgelegt ist, Endgerätvorrichtungsinformationen der Endgerätvorrichtung (30n) zu speichern; und
- eine Dienstnutznießungseinheit (306), die ausgelegt ist, einen durch die Zentralvorrichtung (50) bereitgestellten Dienst zu nutznießen, wobei
die Zentralvorrichtung (50) umfasst:
- eine Authentifikationsverfahrensbestimmungseinheit (504);
- eine Authentifikationsverarbeitungseinheit (506), die ausgelegt ist, eine Authentifikationsverarbeitung gemäß einem durch die Authentifikationsverfahrensbestimmungseinheit (504) bestimmten Anwenderauthentifikätionsverfahren auszuführen; und
- eine Dienstbereitstellungseinheit (508), die ausgelegt ist, für die Endgerätvorrichtung (30n) einen Dienst bereitzustellen, wenn die Authentifikationsverarbeitung erfolgreich ist, **dadurch gekennzeichnet, dass** die Zentralvorrichtung (50) ferner umfasst:
- eine Endgerätvorrichtungsinformationsdatenbank (503), die ausgelegt ist, eine praktische Verwendung für jede Endgerätvorrichtung (30n) zu speichern, wobei jeder Endgerätvorrichtung eine der mehreren verschiedenen praktischen Verwendungen zugeordnet ist; und
- eine Authentifikationsstrategiedatenbank (505) mit in ihr als eine Authentifikationsstrategie eingetragenen mehreren Kombinationen von praktischen Verwendungen und Anwenderauthentifikationsverfahren der Endgerätvorrichtung (30n);
wobei die Authentifikationsbestimmungseinheit (504) ausgelegt ist, ein Anwenderauthentifikationsverfahren aus der in der Authentifikationsstrategiedatenbank (505) eingetragenen Authentifikationsstrategie zu bestimmen und
wobei die Zentralvorrichtung (50) ferner eine Einheit für die Bestimmung der praktischen Verwendung einer Endgerätvorrichtung (502) enthält, die eine praktische Verwendung der Endgerätvorrichtung (30n) aus von der Endgerätvorrichtung (30n) empfangenen Endgerätvorrichtungsinformationen und der Endgerätvorrichtungsinformationsdatenbank (503) bestimmt, wobei
die Authentifikationsverfahrensbestimmungseinheit (504) ein Anwenderauthentifikationsverfahren anhand einer durch die Einheit für die Bestimmung der praktischen Verwendung der Endgerätvorrichtung (502) bestimmten praktischen Verwendung der Endgerät- , vorrichtung (30n) und der in der Authentifikationsstrategiedatenbank (505) eingetragenen Authentifikationsstrategie bestimmt.

3. Authentifikationssystem nach Anspruch 2, wobei die Endgerätvorrichtung (30n) ferner umfasst:
- eine Kommunikationseinheit (301), die ausgelegt ist, Daten an die Zentralvorrichtung zu senden bzw. Daten von der Zentralvorrichtung (50) zu empfangen;
- eine Datensende-/Datenempfangseinheit (302), die ausgelegt ist, Daten an eine Anwendervorrichtung (20m) zu senden bzw. von ihr zu empfangen; und
- eine Authentifikationsverarbeitungseinheit (305), die ausgelegt ist, eine Authentifikationsverarbeitung gemäß einer Authentifikationsanforderung der Zentralvorrichtung (50) auszuführen.

4. Authentifikationssystem nach Anspruch 3, wobei die Endgerätvorrichtung (30n) ferner eine Anwenderinformationseinheit (304) umfasst, die ausgelegt ist, Anwenderinformationen von einem oder mehreren Anwendern zu speichern, wobei
die Authentifikationsverarbeitungseinheit (305) ausgelegt ist, die Anwenderinformationen von der Anwenderinformationseinheit (304) gemäß einer Authentifikationsanforderung der Zentralvorrichtung (50) zu erfassen, und wobei
die Kommunikationseinheit (301) ausgelegt ist, die Anwenderinformationen an die Zentralvorrichtung (50) zu senden.

5. Authentifikationssystem nach Anspruch 3, wobei
die Authentifikationsverarbeitungseinheit (305) ausgelegt ist, die Endgerätvorrichtungsinformationen von der Endgerätvorrichtungsinformationseinheit (303) gemäß einer Authentifikationsanforderung der Zentralvorrichtung (50) zu erfassen, und wobei
die Kommunikationseinheit (301) ausgelegt ist, die Endgerätvorrichtungsinformationen an die Zentralvorrichtung (50) zu senden.

6. Authentifikationssystem nach Anspruch 2, wobei
die Endgerätvorrichtung (30n) eine Authentifikationsverarbeitungseinheit (305) enthält, die ausgelegt ist, eine Authentifikationsverarbeitung gemäß einer Authentifikationsanforderung der Zentralvorrichtung (50) auszuführen, wobei
die Zentralvorrichtung (50) eine Anwenderinformationsdatenbank (507) enthält, die ausgelegt ist, Informationen zu speichern, die einer Anwender-ID zugeordnet sind, wobei
dann, wenn ein durch die Authentifikationsverfahrensbestimmungseinheit bestimmtes Anwenderauthentifikationsverfahren anfordert, dass die Endgerätvorrichtung (30n) Authentifikationsinformationen erzeugt,
die Zentralvorrichtung (50) ausgelegt ist, eine Authentifikationsanforderung, die eine zufällige Nummer enthält, an die Endgerätvorrichtung (30n) zu senden, und
die Authentifikationsverarbeitungseinheit (305) der Endgerätvorrichtung (30n) ausgelegt ist, Authentifikationsinformationen anhand der zufälligen Nummer zu erzeugen,
die Endgerätvorrichtung (30n) ausgelegt ist, diese Authentifikationsinformationen zusammen mit in einer Anwenderinformationseinheit (304) der Endgerätvorrichtung (30n) gespeicherten Anwenderinformationen an die Zentralvorrichtung (50) zu senden und
die Authentifikationsverarbeitungseinheit (506) der Zentralvorrichtung (50) ausgelegt ist, die Anwenderauthentifikationsverarbeitung anhand der Authentifikationsinformationen und der von der Endgerätvorrichtung (30n) empfangenen Anwenderinformationen und der gesendeten zufälligen Nummer und der in der Anwenderinformationsdatenbank (507) gespeicherten Anwenderinformationen auszuführen.

7. Authentifikationssystem nach Anspruch 2, wobei
die Endgerätvorrichtung (30n) eine Anwendervorrichtung (20m) und eine Datensende-/Datenempfangseinheit (302), die ausgelegt ist, Daten zu senden bzw. zu empfangen, enthält, wobei die Anwendervorrichtung (20m) enthält:
- eine Datensende-/Datenempfangseinheit (201), die ausgelegt ist, Daten an die Endgerätvorrichtung (30n) zu senden bzw. von ihr zu empfangen;
- eine Schlüsselspeichereinheit (203), die ausgelegt ist, geheime Informationen zu speichern; und
- eine Verschlüsselungsbetriebseinheit (20), die ausgelegt ist, eine Verschlüsselung bzw. Entschlüsselung durch Verwenden der geheimen Informationen auszuführen, wobei die Authentifikationsverarbeitungseinheit (506) der Zentralvorrichtung (50) ausgelegt ist, eine Authentifikationsanforderung an die Endgerätvorrichtung (30n) anhand des Endgerätauthentifikationsverfahrens zu senden, wobei eine Authentifikationsverarbeitungseinheit der Endgerätvorrichtung (30n) ausgelegt ist, die Authentifikationsanforderung an die Anwendervorrichtung (20m) gemäß der Authentifikationsanforderung zu senden, wobei
die Verschlüsselungsbetriebseinheit (202) der Anwendervorrichtung (20m) ausgelegt ist, ein Verarbeitungsergebnis der Verschlüsselung bzw. der Entschlüsselung anhand der Authentifikationsanforderung an die Endgerätvorrichtung (30n) zu senden, wobei
die Authentifikationsbearbeitungseinheit (305) der Endgerätvorrichtung (30n) ausgelegt ist, ein Verarbeitungsergebnis der Verschlüsselung bzw. der Entschlüsselung an die Zentralvorrichtung (50) zu senden, und wobei
die Authentifikationsverarbeitungseinheit (506) der Zentralvorrichtung (50) ausgelegt ist, eine Verarbeitung anhand eines Verarbeitungsergebnisses der Verschlüsselung bzw. der Entschlüsselung in dem bestimmten Authentifikationsverfahren auszuführen.

8. Authentifikationssystem nach Anspruch 2, wobei die Authentifikationsverarbeitungseinheit (506) der Zentralvorrichtung (50) ausgelegt ist, eine Endgerätvorrichtungsauthentifikationsanforderung anhand einer Zugriffsanforderung von der Endgerätvorrichtung (30n) zu erstellen und Serverauthentifikationsinformationen durch das Erstellen der Endgerätvorrichtungsauthentifikationsanforderung zu senden, wobei
eine Authentifikationsverarbeitungseinheit (305) der Endgerätvorrichtung (30n) ausgelegt ist, die Zentralvorrichtung (5) durch Verwenden der Serverauthentifikationsinformationen zu authentifizieren, und
dann, wenn die Zentralvorrichtung (50) erfolgreich authentifiziert ist, die Endgerätvorrichtung (30n) ausgelegt ist, die Endgerätvorrichtungsinformationen an die Zentralvorrichtung (50) zu senden und
die Authentifikationsverarbeitungseinheit (506) der Zentralvorrichtung (50) ausgelegt ist, die Endgerätvorrichtung (30n) anhand der Endgerätvorrichtungsinformationen zu authentifizieren.

9. Authentifikationssystem nach einem der Ansprüche 2-8, wobei ein anzuforderndes Anwenderauthentifikationsverfahren ein IDPasswortverfahren, ein Auszugauthentifikationsverfahren oder ein Authentifikationsverfahren eines öffentlichen Schlüssels ist.

10. Authentifikationsprozedur, wobei eine Zentralvorrichtung (50) einen Anwender unter Verwendung einer Endgerätvorrichtung (30n) authentifiziert, um einen Dienst bereitzustellen, die die Schritte umfasst:
- Speichern von Endgerätvorrichtungsinformationen der Endgerätvorrichtung (30n) in einer Endgerätvorrichtungsinformationseinheit (303) der Endgerätvorrichtung (30n);
- Nutznießen eines durch die Zentralvorrichtung (50) bereitgestellten Dienstes in einer Dienstnutznießungseinheit (306) der Endgerätvorrichtung (30n), wobei
das Verfahren ferner die Schritte umfasst:
- Speichern einer praktischen Verwendung für jede Endgerätvorrichtung (30n) in einer Endgerätvorrichtungsinformationsdatenbank (503) der Zentralvorrichtung (50), wobei jeder Endgerätvorrichtung eine von mehreren verschiedenen praktischen Verwendungen zugeordnet ist;
- Eintragen von mehreren Kombinationen von praktischen Verwendungen und Authentifikationsverfahren der Endgerätvorrichtung (30n) in einer Authentifikationsstrategiedatenbank (50) der Zentralvorrichtung (50) als eine Authentifikationsstrategie;
- Bestimmen eines Anwenderauthentifikationsverfahrens aus der in der Authentifikationsstrategiedatenbank (505) eingetragenen Authentifikationsstrategie mit einer Authentifikationsverfahrensbestimmungseinheit (504) der Zentralvorrichtung (50);
- Ausführen einer Authentifikationsverarbeitung gemäß einem durch die Authentifikationsverfahrensbestimmungseinheit (504) bestimmten Anwenderauthentifikationsverfahren mit einer Authentifikationsverarbeitungseinheit (506) der Zentralvorrichtung (50); und
- Bereitstellen eines Dienstes der Endgerätvorrichtung (30n), wenn die Authentifikationsverarbeitung erfolgreich ist,
wobei die Zentralvorrichtung (50) eine Einheit für die Bestimmung einer praktischen Verwendung einer Endgerätvorrichtung (502) enthält, die eine praktische Verwendung der Endgerätvorrichtung (30n) aus von der Endgerätvorrichtung (30n) empfangenen Endgerätvorrichtungsinformationen und der Endgerätvorrichturigsinformationsdatenbank (503) bestimmt, wobei
die Authentifikationsverfahrensbestimmungseinheit (504) ein Anwenderauthentifikationsverfahren anhand einer durch die Einheit für die Bestimmung einer praktischen Verwendung einer Endgerätvorrichtung (502) bestimmten praktischen Verwendung der Endgerätvorrichtung (30n) und der in der Authentifikationsstrategiedatenbank (505) eingetragenen Authentifikationsstrategie bestimmt.

## Revendications

1. Appareil central (50) pour fournir un service à un appareil terminal (30n), comprenant :
- une unité de communication (501) adaptée à émettre/recevoir des données;
- une unité de détermination de méthode d'authentification (504) ;
- une unité de traitement d'authentification (506) adaptée à exécuter un traitement d'authentification en accord avec une méthode d'authentification d'utilisateur déterminée par l'unité de détermination de méthode d'authentification (504) ; et
- une unité de fourniture de service (508) adaptée à fournir un service à l'appareil terminal (30n) si le traitement d'authentification donne un succès,
**caractérisé par**
- une base de données d'informations d'appareils terminaux (503), adaptée à stocker une utilisation pratique pour chaque appareil terminal (30n), dans laquelle chaque appareil terminal est associé à une utilisation parmi une pluralité d'utilisations pratiques différentes ;
- une base de données de stratégies d'authentification (505) ayant une pluralité de combinaisons d'utilisations pratiques et de méthodes d'authentification d'utilisateur de l'appareil terminal (30n) enregistrées dans celle-ci à titre de stratégies d'authentification ;
dans lequel l'unité de détermination d'authentification (504) est adaptée à déterminer une méthode d'authentification d'utilisateur depuis la stratégie d'authentification enregistrée dans la base de données de stratégies d'authentification (505), et
dans lequel l'appareil central (50) comprend en outre une unité de détermination d'utilisation pratique pour appareil terminal (502) adaptée à déterminer une utilisation pratique de l'appareil terminal (30n) à partir d'une information d'appareil terminal reçue depuis l'appareil terminal (30n) et de la base de données d'informations d'appareils terminaux (503), dans lequel
l'unité de détermination de méthode d'authentification (504) est adaptée à déterminer une méthode d'authentification d'utilisateur sur la base d'une utilisation pratique de l'appareil terminal (30n), déterminée par l'unité de détermination d'utilisation pratique pour appareil terminal (502) et par la stratégie d'authentification enregistrée dans la base de données de stratégies d'authentification (505).

2. Système d'authentification comprenant un appareil central (50) et un appareil terminal (30n), dans lequel l'appareil central (50) est adapté à authentifier un utilisateur en utilisant l'appareil terminal (30n) afin de fournir un service, dans lequel l'appareil terminal (30n) comprend :
- une unité d'information d'appareil terminal (303) adaptée à stocker une information d'appareil terminal de l'appareil terminal (30n) ; et
- une unité de jouissance de service (306) adaptée à jouir d'un service fourni par l'appareil central (50), dans lequel
l'appareil central (50) comprend :
- une unité de détermination de méthode d'authentification (504) ;
- une unité de traitement d'authentification (506) adaptée à exécuter un traitement d'authentification en accord avec une méthode d'authentification d'utilisateur déterminée par l'unité de détermination de méthode d'authentification (504) ; et
- une unité de fourniture de service (508) adaptée à fournir un service à l'appareil terminal (30n) si le traitement d'authentification donne un succès
**caractérisé en ce que** l'appareil central (50) comprend en outre :
- une base de données d'informations d'appareils terminaux (503) adaptée à stocker une utilisation pratique pour chaque appareil terminal (30n), dans laquelle chaque appareil terminal est associé avec une utilisation parmi une pluralité d'utilisations pratiques différentes ; et
- une base de données de stratégies d'authentification (505) ayant une pluralité de combinaisons d'utilisations pratiques et de méthodes d'authentification d'utilisateur de l'appareil terminal (30n) enregistrées dans celle-ci à titre de stratégie d'authentification ;
dans lequel l'unité de détermination de méthode d'authentification (504) est adaptée à déterminer une méthode d'authentification d'utilisateur depuis la stratégie d'authentification enregistrée dans la base de données de stratégies d'authentification (505), et
dans lequel l'appareil central (50) inclut en outre une unité de détermination d'utilisation pratique pour appareil terminal (502) qui détermine une utilisation pratique de l'appareil terminal (30n) à partir de l'information d'appareil terminal reçue depuis l'appareil terminal (30n) et depuis la base de données d'informations d'appareils terminaux (503), dans lequel
l'unité de détermination de méthode d'authentification (504) détermine une méthode d'authentification d'utilisateur sur la base d'une utilisation
pratique de l'appareil terminal (30n) déterminée par l'unité de détermination d'utilisation pratique pour appareil terminal (502) et par la stratégie d'authentification enregistrée dans la base de données de stratégies d'authentification (505).

3. Système d'authentification selon la revendication 2, dans lequel l'appareil terminal (30n) comprend en outre :
- une unité de communication (301) adaptée à émettre/recevoir des données vers/depuis l'appareil central (50) ;
- une unité d'émission/réception de données (302) adaptée à émettre/recevoir des données vers/depuis un dispositif utilisateur (20m) ; et
- une unité de traitement d'authentification (305) adaptée à exécuter un traitement d'authentification en accord avec une requête d'authentification de l'appareil central (50).

4. Système d'authentification selon la revendication 3, dans lequel l'appareil terminal (30n) comprend en outre une unité d'information d'utilisateur (304) adaptée à stocker des informations d'utilisateur d'un ou plusieurs utilisateurs, dans lequel
l'unité de traitement d'authentification (305) est adaptée à acquérir les informations d'utilisateur depuis l'unité d'informations d'utilisateur (304) en accord avec une requête d'authentification de l'appareil central (50), et dans lequel
l'unité de communication (301) est adaptée à envoyer l'information d'utilisateur à l'appareil central (50).

5. Système d'authentification selon la revendication 3, dans lequel l'unité de traitement d'authentification (305) est adaptée à acquérir l'information d'appareil terminal depuis l'unité d'informations d'appareils terminaux (303) en accord avec une requête d'authentification de l'appareil central (50), et dans lequel l'unité de communication (301) est adaptée à envoyer l'information d'appareil terminal à l'appareil central (50).

6. Système d'authentification selon la revendication 2, dans lequel l'appareil terminal (30n) inclut une unité de traitement d'authentification (305) adaptée à exécuter un traitement d'authentification en accord avec une requête d'authentification de l'appareil central (50), dans lequel
l'appareil central (50) inclut une base de données d'information d'utilisateur (507) adaptée à stocker une information associée avec un identificateur (ID) d'utilisateur, dans lequel
quand une méthode d'authentification d'utilisateur déterminée par l'unité de détermination de méthode d'authentification (504) requiert de l'appareil terminal (30n) qu'il génère une information d'authentification, l'appareil central (50) est adapté à envoyer une requête d'authentification incluant un nombre aléatoire à l'appareil terminal (30n), et
l'unité de traitement d'authentification (305) de l'appareil terminal (30n) est adaptée à générer une information d'authentification sur la base du nombre aléatoire,
l'appareil terminal (30n) est adapté à envoyer à l'appareil central (50) cette information d'authentification ensemble avec une information d'utilisateur stockée dans une unité d'information d'utilisateur (304) de l'appareil terminal (30n), et
l'unité de traitement d'authentification (506) de l'appareil central (50) est adaptée à exécuter le traitement d'authentification d'utilisateur sur la base de l'information d'authentification et de l'information utilisateur reçue depuis l'appareil terminal (30n) et du nombre aléatoire envoyé, et
de l'information stockée dans la base de données d'informations d'utilisateurs (507).

7. Système d'authentification selon la revendication 2, dans lequel l'appareil terminal (30n) inclut un dispositif utilisateur (20m) et une unité d'émission/réception de données (302) adaptée à émettre/recevoir des données, dans lequel le dispositif utilisateur (20m) inclut :
- une unité d'émission/réception de données (201) adaptée à émettre/recevoir des données vers/depuis l'appareil terminal (30n) ;
- une unité de stockage de clé (203) adaptée à stocker une information secrète ; et
- une unité opérationnelle de cryptage (202) adaptée à exécuter un cryptage/décryptage en utilisant l'information secrète, dans lequel l'unité de traitement d'authentification (506) de l'appareil central (50) est adaptée à envoyer une requête d'authentification à l'appareil terminal (30n) sur la base de la méthode d'authentification de terminal, dans lequel
une unité de traitement d'authentification de l'appareil terminal (30n) est adaptée à envoyer la requête d'authentification au dispositif utilisateur (20m) en accord avec la requête d'authentification, dans lequel
l'unité opérationnelle de cryptage (202) du dispositif utilisateur (20m) est adaptée à envoyer un résultat de traitement du cryptage/décryptage sur la base de la requête d'authentification à l'appareil terminal (30n), dans lequel
l'unité de traitement d'authentification (305) de l'appareil terminal (30n) est adaptée à envoyer un résultat de traitement du cryptage/décryptage à l'appareil central (50), et dans lequel
l'unité de traitement d'authentification (506) de l'appareil central (50) est adaptée à exécuter un traitement sur la base d'un résultat de traitement du cryptage/décryptage dans la méthode d'authentification déterminée.

8. Système d'authentification selon la revendication 2, dans lequel l'unité de traitement d'authentification (506) de l'appareil central (50) est adaptée à faire une requête d'authentification d'appareil terminal sur la base d'une requête d'accès depuis l'appareil terminal (30n), et à envoyer une information d'authentification de serveur lorsqu'elle fait la requête d'authentification d'appareil terminal, dans lequel une unité de traitement d'authentification (305) de l'appareil terminal (30n) est adaptée à authentifier l'appareil central (50) en utilisant l'information d'authentification de serveur, et
quand l'appareil central (50) a été authentifié avec succès, l'appareil terminal (30n) est adapté à envoyer l'information d'appareil terminal à l'appareil central (50), et
l'unité de traitement d'authentification (506) de l'appareil central (50) est adaptée à authentifier l'appareil terminal (30n) sur la base de l'information d'appareil terminal.

9. Système d'authentification selon l'une quelconque des revendications 2 à 8, dans lequel une méthode d'authentification d'utilisateur pour requérir est une méthode à mot de passe avec identificateur, une méthode d'authentification dite "résumée" (digest), ou une méthode d'authentification à clé publique.

10. Procédure d'authentification dans laquelle un appareil central (50) authentifie un utilisateur qui utilise un appareil terminal (30n) afin de fournir un service, qui comprend les étapes consistant à :
- stocker une information d'appareil terminal concernant l'appareil terminal (30n) dans une unité d'information d'appareil terminal (303) de l'appareil terminal (30n) ;
- jouir d'un service fourni par l'appareil central (50) dans une unité de jouissance de service (306) de l'appareil terminal (30n), dans lequel la procédure comprend en outre les étapes consistant à :
- stocker une utilisation pratique pour chaque appareil terminal (30n) dans une base de données d'informations d'appareils terminaux (503) de l'appareil central (50), dans laquelle chaque appareil terminal est associé avec une utilisation parmi une pluralité d'utilisations pratiques différentes ;
- enregistrer une pluralité de combinaisons d'utilisations pratiques et de méthodes d'authentification de l'appareil terminal (30n) dans une base de données de stratégies d'authentification (505) de l'appareil central (50) à titre de stratégie d'authentification ;
- déterminer une méthode d'authentification d'utilisateur à partir de la stratégie d'authentification enregistrée dans la base de données de stratégies d'authentification (505) avec une unité de détermination de méthode d'authentification (504) de l'appareil central (50) ;
- exécuter un traitement d'authentification en accord avec une méthode d'authentification d'utilisateur déterminée par l'unité de détermination de méthode d'authentification (504) avec une unité de traitement d'authentification (506) de l'appareil central (50) ; et
- fournir un service à l'appareil terminal (30n) si le traitement d'authentification donne un succès,
dans lequel l'appareil central (50) inclut une unité de détermination d'utilisation pratique pour appareil terminal (502) qui détermine une utilisation pratique de l'appareil terminal (30n) à partir de l'information d'appareil terminal reçue depuis l'appareil terminal (30n) et de la base de données d'information d'appareils terminaux (503), dans lequel l'unité de détermination de méthode d'authentification (504) détermine une méthode d'authentification d'utilisateur sur la base d'une utilisation pratique de l'appareil terminal (30n) déterminée par l'unité de détermination d'utilisation pratique pour appareil terminal (502) et de la stratégie d'authentification enregistrée dans la base de données de stratégies d'authentification (505).
